**Europäisches Patentamt**

**European Patent Office**

**Office européen des brevets**

(19)

(11) Numéro de publication : **0 402 221 B1**

(12) ## FASCICULE DE BREVET EUROPEEN

(45) Date de publication du fascicule du brevet :
**09.12.92 Bulletin 92/50**

(51) Int. Cl.$^5$ : **A01G 13/02**

(21) Numéro de dépôt : **90401498.2**

(22) Date de dépôt : **05.06.90**

(54) **Pièce amovible de fixation au sol d'un élément à fixer.**

(30) Priorité : **05.06.89 FR 8907405**

(43) Date de publication de la demande :
**12.12.90 Bulletin 90/50**

(45) Mention de la délivrance du brevet :
**09.12.92 Bulletin 92/50**

(84) Etats contractants désignés :
**AT BE CH DE DK ES FR GB GR IT LI LU NL SE**

(56) Documents cités :
**FR-A- 1 412 395
US-A- 3 903 626
US-A- 4 026 094
US-A- 4 825 600**

(73) Titulaire : **SARL DL SYSTEM
17 Dommarville, Sancheville
F-28800 Bonneval (FR)**

(72) Inventeur : **Dupre, Pascal
Ferme d'Ecurie
Orsonville, F-78660 Ablis (FR)**
Inventeur : **Lavo, Guy
Dommarville
Sancheville, F-28800 Bonneval (FR)**

(74) Mandataire : **Derambure, Christian
Cabinet Bouju Derambure (Bugnion) S.A. 55,
rue Boissonade
F-75014 Paris (FR)**

Jouve, 18, rue Saint-Denis, 75001 PARIS

EP 0 402 221 B1

## Description

L'invention concerne une pièce amovible de fixation au sol d'un élément à fixer et son procédé de mise en oeuvre. Elle est destinée principalement à un élément à fixer constitué par une bâche, un film, un filet, une bande de protection, de plantation ou de culture, pour l'horticulture, l'agriculture, le maraîchage, le jardinage. Elle peut être destinée à ses applications analogues telles que des carreaux ou attaches dans le même domaine technique.

L'usage dans le domaine horticole, agricole, maraîcher et le jardinage de bâches, films, filets, bandes de protection, plantation, culture est aujourd'hui bien connu et répandu. Ces bâches, films, filets, bandes sont renommés par la suite "éléments à fixer". De tels éléments à fixer peuvent avoir différentes propriétés fonctionnelles: transparence ou opacité, surface continue ou non, perforation ou microperforation plus ou moins importantes, également réparties ou non, incorporation de produits fonctionnels, etc...

Jusqu'à présent de tels éléments sont, dans la pratique la plus généralisée, fixer au sol de la manière suivante : ils sont d'abord disposés sur le sol à l'emplacement, en étant suffisamment plats et tendus. Puis, ensuite, l'utilisateur les immobilise au sol en jetant sur eux de place en place, notamment sur les bords des tas de terre prélevés au voisinage au moyen d'une pelle ou bêche. Cette opération est manuelle et ne peut que difficilement être mécanisée. Bien que généralisée, elle présente en outre de nombreux inconvénients : le maintien de l'élément à fixer n'est pas parfait ; il ne peut être contrôlé ; il peut être affecté notamment en cas de pluie ou d'humidité ; la terre tend souvent à se répartir exagérément sur l'élément à fixer en dehors de ce qui est strictement nécessaire ou, au contraire, hors de l'élément ce qui, dans les deux cas, n'est pas souhaitable. Si l'opération de fixation, ainsi réalisée, présente des difficultés et inconvénients, il en est de même de celle inverse, consistant à enlever la terre de l'élément à fixer lorsque cela est jugé nécessaire.

Il a été proposé dans la littérature, des crochets ou piquets destinés à la fixation au sol de tels éléments à fixer. Toutefois, on doit constater que de tels crochets ou piquets n'ont pas eu à ce jour de succès commercial, sans doute étant donné leurs défiances. Le document FR-A- 1 412 395 décrit un crochet métallique en forme de T enfoncé en terre dans une bande de trous. Cependant un tel crochet est enclin à ne pas rester fiché dans le sol. Sa manipulation, sa mise en place et son enlèvement volontaire sont mal commode. Il n'est pas possible de contrôler visuellement et rapidement les crochets mis en place. Du fait de leur conception les crochets ne peuvent être empilés ou superposés lors du stockage ou la mise en place ou l'enlèvement et, au contraire est à redouter que les différents crochets ne s'accrochent les uns aux autres de façon non souhaitable et désordonnée. De tels crochets ne permettent donc pas des procédés nécessaires de mise en place et enlèvement.

Le document US-A-3 903 626 décrit un ancrage au sol comprenant une tige pourvue d'un filetage et une tête montée à pivotement sur la tige à l'opposée de sa pointe. Cet ancrage comporte plusieurs pièces accessibles entre elles de sorte que son coût est surement prohibitif pour un usage massif. Un tel ancrage présente également les mêmes inconvénients que ceux mentionnés précédemment en référence avec le crochet selon le document FR-A-1 412 395.

Le document US-A-4 026 094 décrit une structure pouvant accessoirement faire fonction de piquet mais destinée par ailleurs à être incluse dans un râteau. Cette structure comporte un pieu principal fixé à une platine à laquelle est fixée, par ailleurs, une petite pointe. Le pieu est destiné à être fiché dans le sol seul tandis que la petite pointe est destinée à être fichée dans la couverture du sol seule. Dès lors, la mise en oeuvre de telle structure implique une précision extrême incompatible avec des éléments à fixer de grandes surfaces tels que ceux utilisés aujourd'hui en agriculture. De plus les inconvénients déjà retrouvés plus haut ne sont pas non plus solutionnés par cette structure.

Le document US-A-4 825 600 décrit un ancrage polyvalent : pour le jardin ou le béton. Cet ancrage comporte deux pièces mobiles l'une par rapport à l'autre et détachables l'une de l'autre, toutes deux réalisées en forme de fer plié : la première forme pieu est destinée à être fichée dans le sol en traversant la couverture à maintenir. Elle est terminée, à l'opposée de sa pointe extrême libre d'une poignée. Dans sa partie médiane, elle comporte une boucle pour le maintien d'une boucle de la seconde pièce. Celle-ci outre sa boucle médiane comporte deux pieds d'extrémités incurvés en boucle. Ces pieds sont destinés à venir en appui contre la couverture. Du fait des boucles la seconde pièce est écartée de sa couverture sauf en ce qui concerne les deux pieds lesquels non seulement ne traversent pas la couverture mais ne sont pas non plus enfoncés dans le sol. Un tel ancrage présente non seulement les inconvénients des structures déformables mais en plus les deux pièces peuvent être dissociées l'une de l'autre par inadvertence. Ainsi que déjà mentionné, la présence des boucles peut conduire à l'accrochage intempestif des ancrages. L'ancrage ne comporte qu'un pieu unique susceptible de pivoter et de se désengager du sol. L'enfoncement dans le sol est mal commode. Le maintien ultérieur de la couverture est aléatoire et peu satisfaisant, avec le temps l'ancrage peut jouer et se défaire. La réalisation en forme de fer plié manque de rigidité.

L'invention a pour objet de permettre une fixation amovible efficace d'éléments à fixer tels que ceux expressément visés ici : bâche, film, filet, bande de protection, de plantation, de culture pour l'horticulture, l'agriculture, le maraîchage, le jardinage, ou ses applications analogues (tel que cordeau ou attache). En effet, de tels éléments à fixer, dans ce domaine technique, impliquant un certain nombre de contrainte bien spécifique, le dispositif de fixation doit pouvoir être utilisé en grand nombre donc pouvoir être stocké et rangé facilement. Sa mise en place doit pouvoir être réalisée facilement. La sécurité du maintien en place doit être assurée, y compris en cas de contrainte extérieure : vent, tension exercée sur l'élément à fixer, caractère meuble ou boueux du sol. Une fois en place, le contrôle de la présence et de la position du dispositif doivent pouvoir être assurés. L'enlèvement des dispositifs, lorsque nécessaire, doit être possible, de même que leur utilisation. La mise en place, le stockage, l'enlèvement doivent être compatibles avec une mécanisation. Le dispositif doit être peu encombrant, léger, résistant, insensible aux agressions extérieures (humidité, engrais, amendement, etc...). Enfin, compte tenu du nombre important de dispositifs utilisés, le coût de revient doit être raisonnable.

A cet effet l'invention propose d'abord une pièce amovible de fixation qui, d'une part est rigide et indéformable et d'autre part comprend :

. une fiche principale allongée destinée à traverser, à partir de sa partie extrême libre d'enfoncement, l'élément à fixer 3 et à être enfoncée dans le sol ;

. une garde fixée transversalement à la fiche principale à l'opposée de sa partie extrême libre d'enfoncement, destinée à immobiliser l'élément à fixer par serrage contre le sol ; caractérisée en ce qu'elle comprend, en outre,

au moins une fiche secondaire allongée, sensiblement parallèle à et écartée de tranversalement de la fiche principale, fixée à la garde destinée à être enfoncée dans le sol ;

et une poignée située, par rapport à la garde, du côté opposé à celui où se trouve les fiches principale et secondaires, de manière que la pièce de fixation étant fichée dans le sol, et l'élément à fixer, la poignée soit en permanence visible et accessible au dessus du sol et de l'élément à fixer.

Dans la forme de réalisation préférentielle, la pièce est telle qu'elle comprend, en outre deux fiches secondaires allongées, sensiblement parallèles à et écartées transversalement et symétriquement à la fiche principale, fixées aux deux extrémités de la garde, de longueur plus petites que celle de la fiche principale ;

et une poignée ayant une forme générale d'arceau et comprenant une âme pour la saisie et la manipulation et, de part et d'autre de l'âme, deux branches 14 sensiblement colinéaires et opposées aux deux fiches secondaires, reliant l'âme 13 à la garde ; l'âme et les deux branches de la poignée et la garde définissant une ouverture d'accès libre formant passage pour un organe d'enfichage ou désenfichage ; la garde 9 et la poignée constituant chacune une pièce de force apte à encaisser les efforts imprimés à la pièce de fixation pour la fiche dans la partie du sol et de l'élément à fixer ; la pièce étant réalisée en matière plastique profilée en section droite transversale et étant tout entière comprise entre deux plans enveloppes parallèles entre eux et proches l'un de l'autre.

Les autres caractéristiques et avantages de l'invention apparaitront à la lumière de la description suivante qui se réfère aux figures annexées dans lesquelles :

La figure 1 est une vue en élévation d'une première variante de pièce de fixation selon l'invention.

La figure 2 est un axe de côté de la pièce de fixation selon la figure 1.

Les figures 3, 4 et 5 sont trois vues en coupe de la pièce de fixation, selon les lignes III- III, IV - IV et V - V de la figure 1.

La figure 6 est une vue schématique en coupe par un plan vertical illustrant la mise en oeuvre de la pièce de fixation selon les figures 1 à 5.

La figure 7 est une vue en perspective d'une seconde forme de réalisation de pièce de fixation selon l'invention.

L'invention concerne une pièce 1 amovible de fixation au sol 2 d'un élément à fixer 3.

L'élément à fixer 3 est, comme déjà indiqué, une bâche, un film, un filet, une bande de protection, de plantation, de culture tel que cela est utilisé pour l'horticulture, l'agriculture, le maraîchage, le jardinage. Le cas échéant, l'élément à fixer 3 constitue une application analogue de la pièce de fixation notamment carreau ou attache.

La pièce 1 est rigide et indéformable dans sa totalité. Préférentiellement elle est monobloc. Dans le cas où elle est en plusieurs parties ou pièces celles-ci sont associées rigidement les unes aux autres sans possibilité de rotation, pivotement, coulissement, désengagement intempestif. A cet effet, la pièce 1 est préférentiellement réalisée en matière plastique dure et rigide et peut être chargée de fibres de verres lui conférant solidité et légèreté.

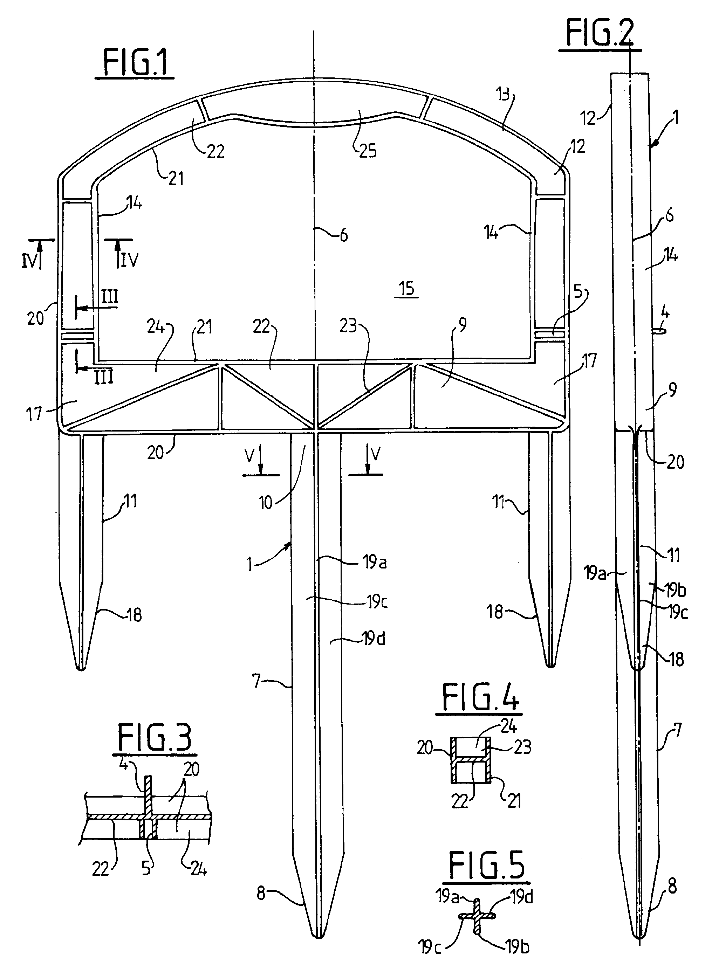

Exception faite d'organes d'accrochages mâles 4 sur lesquels on revient par la suite, la pièce est toute entière comprise entre deux plans enveloppes ($P_1$, $P_2$) parallèles entre eux et proches l'une de l'autre. Les plans $P_1$ et $P_2$ sont bien visibles sur la figure 2. Ils sont parallèles au plan de la figure 1. Un plan P équidistant des deux plans $P_1$ et $P_2$ constitue un plan de symétrie de la pièce 1 (sauf en ce qui concerne les organes d'accrochage mâles et femelles 5) dans lequel celle-ci s'étend. L'écartement entre les deux plans enveloppes est compris entre environ 0,6 cm et 2 cm, notamment de l'ordre de 1,3 cm. L'encombrement de la pièce 1 (dans les plans P, $P_1$, $P_2$) est de l'ordre d'une trentaine de centimètres de long et de l'ordre d'une quinzaine de centimètres de large, étant précisé que ces dimensions ne sont données qu'à titre indicatif. Préférentiellement, la pièce comporte également un second plan de symétrie Q perpendiculaire au plan P, l'intersection entre les plans P et Q définissant un axe général 6 correspondant à la direction générale le long de laquelle la pièce 1 est déplacée à coulissement pour être fichée ou au contraire enlevée. L'axe général s'étend le long de la longueur de la pièce 1. Le plan Q est bien visible sur la figure 2 et il est parallèle au plan de la figure 2.

La pièce 1 comprend en premier lieu, une fiche principale 7, allongée parallèlement à l'axe 6, destinée à traverser, à partir de sa partie extrême libre d'enfoncement 8 l'élément à fixer 3 et à être enfoncée dans le sol 2.

La pièce 1 comprend, en deuxième lieu, une garde 9 fixée transversalement, à savoir perpendiculairement, à la fiche principale 7 en une partie 10 située à l'opposé de la partie extrême libre d'enfoncement 8, cette garde 9 est destinée en particulier à immobiliser l'élément à fixer 2 par serrage contre le sol 3 et cela sur toute la longueur de la garde 9. Elle s'étend dans la force de réalisation envisagée de façon sensiblement rectiligne.

La pièce 1 comprend, en outre, en troisième lieu, au moins une fiche secondaire 11, allongée, sensiblement parallèle et écartée transversalement en regard de la fiche principale 7, fixée à la garde 9. Une telle fiche secondaire 11 est destinée au moins à être enfoncée dans le sol 2 et le plus généralement à traverser, également, l'élément à fixer 3.

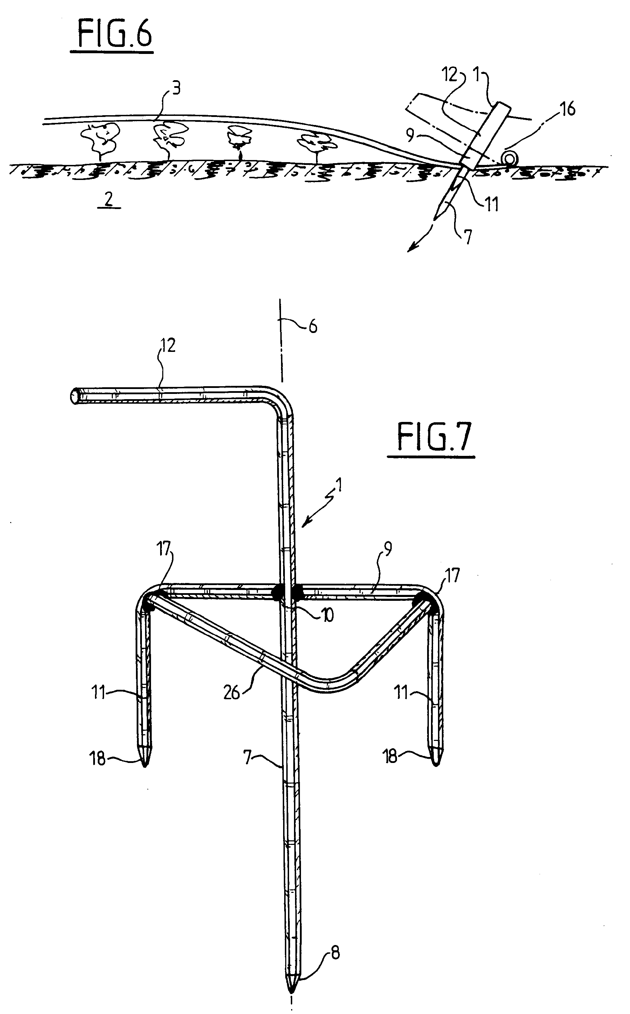

La pièce 1 comprend, en quatrième lieu, une poignée 12 située, par rapport à la garde 9 du côté opposé à celui où se trouve les fiches 7, 11. Ainsi lorsque la pièce 1 est fichée dans le sol 2 et l'élément à fixer 3, la poignée 12 est en permanence visible et accessible au dessin du sol 2 et de l'élément à fixer 3 (voir figure 6). Cela permet notamment un contrôle efficace et rapide de la présence et de la position des pièces de fixation 1.

On se réfère maintenant plus en détail à la première variante de réalisation (figures 1 à 5). Dans ce cas et selon la forme de réalisation préférentielle, la poignée 12 est fixée à la garde 9. cette poignée 12 a une forme générale d'arceau et comprend une âme 13 pour la saisie et la manipulation et, de part et d'autre de l'âme 13, deux branches 14 reliant l'âme 13 à la garde 9. L'âme 13 et les branches 14 de la poignée 12 et la garde 9 définissent une ouverture 15 d'accès libre formant passage pour un organe 16 d'enfichage ou de désenfichage de la pièce 1 dans le sol 2 et l'élément 3 à fixer, notamment le pied de l'utilisateur. Par exemple, l'ouverture 15 a une dimension de l'ordre d'un peu moins de quinze centimètres dans la direction de la garde 9 et l'âme 13 placée en regard. Préférentiellement, l'âme 13 est incurvée à concavité tournée vers la garde 9 ; les deux branches 14 sont sensiblement parallèles entre elles et elles sont fixées sensiblement aux deux extrémités opposées 17 de la garde 9. Une branche 14 et une fiche secondaire 11 sont sensiblement colinéaires et opposées l'une à l'autre c'est à dire qu'une fiche secondaire 11, comme la fiche principale 7 est dirigée dans le menu opposé à la poignée 12 et notamment l'axe 13.

Préférentiellement la pièce 1 comprend deux fiches secondaires 11 et la fiche principale 7 est située sensiblement dans la partie médiane de la garde 9, son axe longitudinal étant l'axe 6, la fiche principale 7 étant alors équidistante des deux fiches secondaires 11. Egalement, préférentiellement, une fiche secondaire 11 est située sensiblement à une extrémité 17 de la garde 9, à l'opposé d'une branche 14 dans la même zone de fixation de celle-ci à la garde 9, à savoir son extrémité 17.

Compte tenu de la symétrie déjà représentée sur les figures 1 et 2, une fiche secondaire 11 a une longueur plus petite que celle de la fiche principale 7. Par exemple, la longueur de la fiche secondaire 11 est comprise entre environ le tiers et les deux tiers de la longueur de la fiche principale 7, notamment de l'ordre de la moitié. Toutes les longueurs sont comptées parallèlement à la direction de l'axe général 6. Compte tenu des distances données précédemment en ce qui concerne la poignée 12, il appert que les fiches 7, 11 s'étendent sur une longueur de plus de la moitié de la longueur hors tout de la pièce 1.

Toute la partie extrême libre d'enfoncement 8 de la fiche principale 7 que celle 18 des fiches secondaire 11 sont effilées en pointe.

Préférentiellement une fiche principale, secondaire 7, 11 présente une forme permettant un enfoncement longitudinal et entravant tout pivotement autour de la direction longitudinale. Par exemple une fiche principale secondaire 7, 11 a, en section droite transversale, une forme de croix ou d'étoile comportant plusieurs branches. En particulier toutes les fiches 7, 11 ont une même section droite transversale. Dans le cas des figures 1 à 5, cette section droite transversale a une forme de croix à quatre branches 19a, 19b, 19c, 19d semblent égales, perpendiculaires deux à deux. La garde 9, la poignée 12 constituent chacune une pièce de force apte à encaisser les efforts imprimés à la pièce de fixation 1 pour la ficher ou la désenficher du sol 2a de l'élément à fixer 3. A cet effet, la garde 9 est limitée par deux chants longitudinaux opposés 20, 21 du côté des fiches principales et secondaires 7, 11 et du côté de la poignée 12 ayant pour fonction de constituer respectivement un appui de serrage de l'élément à fixer 3 et un appui d'enfichage pour un organe d'enfichage 16. Ces chants 20, 21 sont sensiblement perpendiculaires aux plans P et Q. Ils présentent une certaine largeur qui est l'épaisseur de la pièce entre les deux plans $P_1$ et $P_2$ ce qui permet d'exercer la pression pour l'enfichage et pour l'immobilisation de l'élément 1 à fixer. Ces chants 20, 22 constituent les ailes latérales d'une pièce profilée sensiblement en H (en section droite transversale) comportant également une âme centrale 22 située, sensiblement, dans le plan P. Parallèlement, la poignée 22 a, en section droite transversale, une forme profilée sensiblement en H dont les ailes latérales 20, 21 et l'âme centrale 22 viennent dans le prolongement de celles de la garde 9 (figure 4). De plus, la garde 9 la poignée 12 comprend, en outre des ailes internes de rigidification 23 situés dans les deux ouvertures 24 du H. Si le profil en H reste en général constant en taille et en forme sur toute la longueur d'une part de la garde 9 et d'autre part de la poignée 12, il peut le cas échéant être variable. Par exemple l'âme de la poignée 12 comprend une zone centrale renflée 25.

Selon un perfectionnement important de l'invention, dans la première variante considérée (figures 1 à 5), la pièce 1 comporte en outre des organes d'accrochage mâles 4 et femelles 5 situés sur les deux plans enveloppes, permettant, par leur coopération réciproque la superposition et le maintien de plusieurs pièces de fixation 1 l'une contre l'autre.

Les organes 4, 5 sont placés (figure 3) préférentiellement sur les branches 14, notamment au voisinage de la garde 9 : l'organe femelle 5 peut être constitué de deux ailes transversales rapprochées du H de la branche 14. L'organe mâle 4 peut être situé à l'opposé et au droit de l'organe femelle 5 en saillie par rapport au plan enveloppe.

On se réfère maintenant au plan de détail à la seconde variante de réalisation (figure 7). Dans cette variante de réalisation, la pièce 1 est réalisée à partir de tiges profilées à section hexagonale en acier galvanisé façonnées et soudées entre elles. La fiche principale 7 et la poignée 12 constituent une tige coudée à angle droit, une partie formant la fiche principale 7 et l'autre formant la poignée 12. La garde 9 et les deux fiches secondaires 11 constituent une tige doublement coudée à angle droit en U (ou en position normale d'utilisation U renversé). La garde 9 est soudée donc associée régulièrement à la partie supérieure de la fiche principale 7. Dans la forme représentée, la poignée 12 s'étend sensiblement parallèlement à la garde 9. La garde 9 peut également être étendue dans la direction ou le plan au moins sensiblement perpendiculaire au plan formé par les fiches principales 7 et secondaires 11 au moyen d'une plaque ou d'un fer ou profilé supplémentaire 26 coudé en U fixé par ses extrémités 27, par soudage, aux angles entre la garde 9 et les fiches secondaires 11. En variante cette forme de réalisation peut également être réalisée en matière plastique notamment armée de forme profilée, notamment en H en section droite transversale.

Que ce soit la première ou la seconde forme de réalisation, celles-ci peuvent avoir des caractéristiques communes supplémentaires. Par exemple la pièce 1 peut être d'une couleur tranchant avec celles de l'élément 3 à fixer, du sol et des végétaux. La pièce 1 peut être réglable en ce qui concerne notamment la longueur des fiches 7, 11, la garde 9 et les fiches 7, 11 étant montées à coulissement avec blocage le long de l'axe 6. La pièce 1 peut recevoir des éléments d'identification.

Selon un procédé pour fixer au sol 2 un élément 3 à fixer tel que celui décrit précédemment, on dispose sur le sol 2 l'élément 3 à fixer et une fiche dans le sol, et l'élément à fixer au moins une pièce de fixation 1 telle que décrite soit l'élément 3 à fixer comportant à cet effet, des ouvertures, soit, le plus souvent, il est dépourvu, et il est percé par les parties extrêmes 8, 18 des fiches 7, 11 par suite de la force exercée sur la pièce 1 pour la fiche dans le sol. Préférentiellement et généralement on met en oeuvre plusieurs pièces de fixation (1) réparties le long de l'élément (3) à fixer.

On traverse l'élément 3 à fixer avec les fiches principales et secondaire 7, 11 la garde 9 étant appliquée sur l'élément 3 à fixer. Pour mettre en oeuvre une pièce de fixation 1, on enfile celle-ci sur un organe d'enfichage 16 et on appuie sur la garde 9. Préférentiellement on appuie sur la garde 9 dans une direction inclinée par rapport au sol 2 du côté opposé à la tension exercée par l'élément 3 à fixer (figure 6).

## Revendications

1. Pièce amovible de fixation au sol (2) d'un élément à fixer (3) tel que film, filet, bande de protection, de plantation ou de culture, cordeau, attache pour l'horticulture, l'agriculture, le maraîchage, le jardinage, qui d'une part est rigide et indéformable et d'autre part comprend :

     . une fiche principale (7) allongée destinée à traverser, à partir de sa partie extrême libre d'enfoncement (8), l'élément à fixer (3) et à être enfoncée dans le sol (2) ;

     . une garde (9) fixée transversalement à la fiche principale (7) à l'opposé (10) de sa partie extrême libre d'enfoncement (8), destinée à immobiliser l'élément à fixer (3) par serrage contre le sol (2) ; caractérisée en ce qu'elle comprend, en outre,

     . au moins un fiche secondaire (11) allongée, sensiblement parallèle à et écartée transversalement de la fiche principale (7), fixée à la garde (9) destinée à être enfoncée dans le sol (2) ;

     et une poignée (12) située, par rapport à la garde (9), du côté opposé à celui où se trouvent les fiches principale et secondaire(s) (7, 11), de manière que, la pièce de fixation (1) étant fichée dans le sol (2) et dans l'élément à fixer (3), la poignée (12) soit en permanence visible et accessible au dessus du sol (2) et de l'élément à fixer (3).

2.  Pièce amovible de fixation au sol (2) selon la revendication 1, caractérisée en ce que la poignée (12) est fixée à la garde (9).

3.  Pièce amovible de fixation au sol (2) selon la revendication 2, caractérisée en ce que la poignée (12) a une forme générale d'arceau et comprend une âme (13) pour la saisie et la manipulation et, de part et d'autre de l'âme (13), deux branches (14) reliant l'âme (13) à la garde (9).

4.  Pièce amovible de fixation au sol (2) selon la revendication 3, caractérisée en ce que l'âme (13) et les branches (14) de la poignée (12) et la garde (9) définissent une ouverture (15) d'accès libre formant passage pour un organe (16) d'enfichage ou de désenfichage de la pièce (1) dans le sol (2) et l'élément (3) à fixer, notamment le pied de l'utilisateur.

5.  Pièce amovible de fixation au sol (2) selon la revendication 2, caractérisée en ce que l'âme (13) est incurvée à concavité tournée vers la garde (9).

6.  Pièce amovible de fixation au sol (2) selon la revendication 2, caractérisée en ce que les deux branches (14) sont sensiblement parallèles entre elles.

7.  Pièce amovible de fixation au sol (2) selon la revendication 2, caractérisée en ce que les deux branches (14) sont fixées sensiblement aux deux extrémités (17) de la garde (9).

8.  Pièce amovible de fixation au sol (2) selon la revendication 2, caractérisée en ce qu'une branche (14) et une fiche secondaire (11) sont sensiblement colinéaires et opposées l'une à l'autre.

9.  Pièce amovible de fixation au sol (2) selon la revendication 1, caractérisée en ce que la fiche principale (7) est située sensiblement dans la partie médiane de la garde (9).

10. Pièce amovible de fixation au sol (2) selon la revendication 1, caractérisée en ce qu'une fiche secondaire (11) est située sensiblement à une extrémité (17) de la garde (9).

11. Pièce amovible de fixation au sol (2) selon la revendication 1, caractérisée en ce qu'elle comprend deux fiches secondaires (11).

12. Pièce amovible de fixation au sol (2) selon la revendication 1, caractérisée en ce que les deux fiches secondaires (11) sont sensiblement identiques et symétriques l'une de l'autre par rapport à la fiche principale (7).

13. Pièce amovible de fixation au sol (2) selon la revendication 1, caractérisée en ce qu'une fiche secondaire (11) a une longueur plus petite que celle de la fiche principale (7).

14. Pièce amovible de fixation au sol (2) selon la revendication 13, caractérisée en ce que la longueur de la fiche secondaire (11) est comprise entre environ le tiers et les deux tiers de la longueur de la fiche principale (7), notamment de l'ordre de la moitié.

15. Pièce amovible de fixation au sol (2) selon la revendication 1, caractérisée en ce qu'une fiche principale ou secondaire (7, 11) présente une partie extrême libre d'enfoncement (8, 18) effilée en pointe.

16. Pièce amovible de fixation au sol (2) selon la revendication 1, caractérisée en ce qu'une fiche principale ou secondaire (7, 11) présente une forme permettant un enfoncement longitudinal et entravant tout pivotement autour de la direction longitudinale.

17. Pièce amovible de fixation au sol (2) selon la revendication 16, caractérisée en ce qu'une fiche principale ou secondaire (7, 11) a, en section droite transversale, une forme de croix ou d'étoile comportant plusieurs branches.

18. Pièce amovible de fixation au sol (2) selon la revendication 1, caractérisée en ce que la garde (9) s'étend de façon sensiblement rectiligne.

19. Pièce amovible de fixation au sol (2) selon la revendication 1, caractérisée en ce que la garde (9) constitue une pièce de forme apte à encaisser les efforts imprimés à la pièce de fixation (1) pour la ficher dans ou la désenficher du sol (2a) de l'élément à fixer (3).

20. Pièce amovible de fixation au sol (2) selon la revendication 1, caractérisée en ce que la poignée (12) constitue une pièce de force apte à encaisser les efforts imprimés à la pièce de fixation (1) pour la ficher dans ou la désenficher du sol (2a) de l'élément à fixer (3).

21. Pièce amovible de fixation au sol (2) selon la revendication 19, caractérisée en ce que la garde (9) est limitée par deux chants longitudinaux opposés (20, 21) du côté des fiches principale et secondaire(s) (7, 11) et du côté de la poignée (12) ayant pour fonctions de constituer respectivement un appui de serrage de l'élément à fixer (3)

et un appui d'enfichage pour un organe d'enfichage (16).

22. Pièce amovible de fixation au sol (2) selon l'une quelconque des revendications 19, 20, caractérisée en ce que la garde (9) ou la poignée (12) a en section droite transversale, une forme profilée sensiblement en H ayant une âme centrale (22) et deux paires d'ailes latérales (20, 21).

23. Pièce amovible de fixation au sol (2) selon la revendication 22, caractérisée en ce que la garde (9) ou la poignée (12) comprend, en outre des ailes internes de rigidification (23) situées dans les deux ouvertures (24) du H.

24. Pièce amovible de fixation au sol (2) selon la revendication 3, caractérisée en ce que l'âme de la poignée (12) comprend une zone centrale renflée (25).

25. Pièce amovible de fixation au sol (2) selon la revendication 1, caractérisée en ce qu'elle est réalisée en matière plastique.

26. Pièce amovible de fixation au sol (2) selon la revendication 25, caractérisée en ce que la matière plastique est chargée de fibres de verre lui conférant solidité et légèreté.

27. Pièce amovible de fixation au sol (2) selon la revendication 1, caractérisée en ce qu'elle est tout entière comprise entre deux plans enveloppes ($P_1$, $P_2$) parallèles entre eux et proches l'une de l'autre.

28. Pièce amovible de fixation au sol (2) selon la revendication 27, caractérisée en ce que l'écartement entre les deux plans enveloppes est compris entre environ 0,6 cm et 2 cm, notamment de l'ordre de 1,3 cm.

29. Pièce amovible de fixation au sol (2) selon l'une quelconque des revendications 1 et 27, caractérisée en ce qu'elle comporte en outre des organes d'accrochage mâles (4) et femelles (5) situés sur les deux plans enveloppes, permettant, par leur coopération réciproque la superposition et le maintien de plusieurs pièces de fixation (1) l'une contre l'autre.

30. Pièce amovible de fixation au sol (2) d'un élément à fixer (3) tel que film, filet, bande de protection, de plantation ou de culture, cordeau, attache pour l'horticulture, l'agriculture, le maraîchage, le jardinage, qui d'une part est rigide et indéformable et d'autre part comprend :
. une fiche principale (7) allongée destinée à traverser, à partir de sa partie extrême libre d'enfoncement (8), l'élément à fixer (3) et à être enfoncée dans le sol (2) ;
. une garde (9) fixée transversalement à la fiche principale (7) à l'opposé (10) de sa partie extrême libre d'enfoncement (8), destinée à immobiliser l'élément à fixer (3) par serrage contre le sol (2) ;
caractérisée en ce qu'elle comprend en outre deux fiches secondaires (11) allongées, sensiblement parallèles à et écartées transversalement en regard de et symétriquement à la fiche principale (7), fixées au deux extrémités (17) de la garde (9), de longueurs plus petites que celle de la fiche principale (7) ;
et une poignée (12) ayant une forme générale d'arceau et comprenant une âme (13) pour la saisie et la manipulation et, de part et d'autre de l'âme (13), deux branches (14) sensiblement colinéaires et opposées aux deux fiches secondaires (14), reliant l'âme (13) à la garde (9) ; l'âme (13) et les deux branches (14) de la poignée (12) et la garde (9) définissant une ouverture d'accès libre (15) formant passage pour un organe d'enfichage ou de désenfichage (16) : la garde (9) et la poignée (12) constituant chacune une pièce de force apte à encaisser les efforts imprimés à la pièce de fixation (1) pour la ficher ou à la désenficher du sol (2) et de l'élément (3) à fixer ; la pièce (1) étant réalisée en matière plastique profilée en section droite transversale et étant tout entière comprise entre deux plans enveloppes ($P_1$, $P_2$) parallèles entre eux et proches l'un de l'autre.

31. Pièce amovible de fixation au sol (2) d'un élément à fixer (3) tel que film, filet, bande de protection, de plantation ou de culture, cordeau, attache pour l'horituculture, le maraîchage, le jardinage, qui d'une part est rigide et indéformable et d'autre part comprend :
. une fiche principale (7) allongée destinée à traverser, à partir de sa partie extrême libre d'enfoncement (8), l'élément à fixer (3) et à être enfoncée dans le sol (2) ;
. une garde (9) fixée transversalement à la fiche principale (7) à l'opposé (10) de sa partie extrême libre d'enfoncement (8), destinée à immobiliser l'élément à fixer (3) par serrage contre le sol (2) ; caractérisée en ce qu'elle comprend en outre deux fiches secondaires (11) allongées, sensiblement parallèles à et écartée transversalement en regard de et symétriquement à la fiche principale (7), reliées aux deux extrémités (17) de la garde (9), de longueurs plus petites que celles de la fiche principale ;
et une poignée (12) constituant avec la fiche principale (7) une tige coudée à angle droit, la garde (9) étant associée régulièrement à la partie supérieure de la fiche principale (7).

32. Pièce amovible de fixation au sol (2) selon la revendication 31, caractérisée en ce que la garde (9) est également étendue dans la direction ou le plan au moins sensiblement perpendiculairement au plan formé par les fiches principales et secondaires (7, 11).

33. Pièce amovible de fixation au sol (2) selon la revendication 32, caractérisée en ce que la garde (9) comporte une plaque sur un profilé coudé en U.

**Patentansprüche**

1. Abnehmbares Teil zum Befestigen eines Teils (3) am Boden (2) wie z.B. Folie, Netz, Schutzstreifen für Anpflanzungen oder Kulturen, Schnur, Befestigung für Gärtnereigewerbe, Landwirtschaft, Gemüsebau, Gartenbau, das einerseits starr und unverformbar ist und andererseits aus folgenden Teilen besteht:
. einem länglichen Hauptpflock (7) zum Durchstoßen des zu befestigenden Teils (3) mit seinem freien Ende (8) und Einstecken in den Boden (2),
. einem senkrecht zum Hauptpflock (7) verlaufenden Querstück (9) auf der dem freien Ende (8) gegenüberliegenden Seite zum Festhalten des zu befestigenden Teils (3) am Boden (2), dadurch gekennzeichnet, daß es weiterhin,
. mindestens einen weitgehend parallel zum Hauptpflock (7) und in einem bestimmten Abstand davon verlaufenden länglichen Nebenpflock (11) besitzt, der an dem Querstück (9) befestigt ist und ebenfalls in den Boden (2) gesteckt wird,
. sowie einem Griff (12), der sich in Bezug auf das Querstück (9) auf der Seite befindet, die der Seite mit dem Haupt- und Nebenpflock (7, 9) gegenüberliegt, so daß der Griff (12) jederzeit über dem Boden (2) und dem zu befestigenden Teil (3) sichtbar und greifbar ist, wenn das Befestigungsteil (1) in den Boden (2) und in das zu befestigende Teil (3) eingesteckt ist.

2. Abnehmbares Teil zum Befestigen eines Teils (3) am Boden (2) nach Patentanspruch 1, dadurch gekennzeichnet, daß der Griff (12) an dem Querstück (9) befestigt ist.

3. Abnehmbares Teil zum Befestigen eines Teils (3) am Boden (2) nach Patentanspruch 2, dadurch gekennzeichnet, daß der Griff (2) insgesamt die Form eines Bügels hat und einen Kern (13) zum Greifen und Handhaben sowie links und rechts des Kerns (13) zwei Arme (14) besitzt, die den Kern (13) mit dem Querstück (9) verbinden.

4. Abnehmbares Teil zum Befestigen eines Teils (3) am Boden (2) nach Patentanspruch 3, dadurch gekennzeichnet, daß der Kern (13) und die Arme (14) des Griffs (12) mit dem Querstück (9) eine Öffnung (15) bilden, durch die ein Organ (16) zum Einstecken und Herausziehen des Befestigungsteils (1) am Boden (2) und dem zu befestigenden Teil (3) - insbesondere der Fuß des Benutzers - eingeführt werden kann.

5. Abnehmbares Teil zum Befestigen eines Teils (3) am Boden (2) nach Patentanspruch 2, dadurch gekennzeichnet, daß der Kern (13) konkav in Richtung des Querstücks (9) gekrümmt ist.

6. Abnehmbares Teil zum Befestigen eines Teils (3) am Boden (2) nach Patentanspruch 2, dadurch gekennzeichnet, daß die beiden Arme (14) weitgehend parallel zueinander ausgerichtet sind.

7. Abnehmbares Teil zum Befestigen eines Teils (3) am Boden (2) nach Patentanspruch 2, dadurch gekennzeichnet, daß die beiden Arme (14) weitgehend an beiden Enden (17) des Querstücks (9) befestigt sind.

8. Abnehmbares Teil zum Befestigen eines Teils (3) am Boden (2) nach Patentanspruch 2, dadurch gekennzeichnet, daß jeweils ein Arm (14) und ein Nebenpflock (11) weitgehend in gleicher Richtung verlaufen und sich gegenüber liegen.

9. Abnehmbares Teil zum Befestigen eines Teils (3) am Boden (2) nach Patentanspruch 1, dadurch gekennzeichnet, daß sich der Hauptpflock (7) weitgehend im Mittelteil des Querstücks (9) befindet.

10. Abnehmbares Teil zum Befestigen eines Teils (3) am Boden (2) nach Patentanspruch 1, dadurch gekennzeichnet, daß sich ein Nebenpflock (11) weitgehend am Ende (17) des Querstücks (9) befindet.

11. Abnehmbares Teil zum Befestigen eines Teils (3) am Boden (2) nach Patentanspruch 1, dadurch gekennzeichnet, daß es zwei Nebenpflöcke (11) besitzt.

12. Abnehmbares Teil zum Befestigen eines Teils (3) am Boden (2) nach Patentanspruch 1, dadurch gekennzeichnet, daß die beiden Nebenpflöcke (11) weitgehend identisch und symmetrisch zueinander und in Bezug auf den Hauptpflock (7) angebracht sind.

13. Abnehmbares Teil zum Befestigen eines Teils (3) am Boden (2) nach Patentanspruch 1, dadurch gekennzeichnet, daß die Länge eines Nebenpflocks (11) geringer als die des Hauptpflocks (7) ist.

14. Abnehmbares Teil zum Befestigen eines Teils (3) am Boden (2) nach Patentanspruch 13, dadurch gekennzeichnet, daß die Länge eines Nebenpflocks (11) etwa zwischen einem und zwei Drittel, insbesondere etwa die Hälfte der Länge des Hauptpflocks (7) beträgt.

15. Abnehmbares Teil zum Befestigen eines Teils (3) am Boden (2) nach Patentanspruch 1, dadurch gekennzeichnet, daß ein Haupt- oder Nebenpflock (7, 11) ein freies Ende (8, 18) aufweist, das spitz zuläuft.

16. Abnehmbares Teil zum Befestigen eines Teils (3) am Boden (2) nach Patentanspruch 1, dadurch gekennzeichnet, daß ein Haupt- oder Nebenpflock (7, 11) eine Form aufweist, die ein Einstecken in Längsrichtung erlaubt und jedes Drehen um diese Längsrichtung verhindert.

17. Abnehmbares Teil zum Befestigen eines Teils (3) am Boden (2) nach Patentanspruch 1, dadurch gekennzeichnet, daß ein Haupt- oder Nebenpflock (7, 11) in Längsrichtung einen kreuzförmigen oder sternförmigen Querschnitt aufweist.

18. Abnehmbares Teil zum Befestigen eines Teils (3) am Boden (2) nach Patentanspruch 1, dadurch gekennzeichnet, daß das Querstück (9) weitgehend geradlinig verläuft.

19. Abnehmbares Teil zum Befestigen eines Teils (3) am Boden (2) nach Patentanspruch 1, dadurch gekennzeichnet, daß das Querstück (9) ein Kraftaufnahmeteil bildet, das die auf das Befestigungsteil (1) bei dessen Einstecken bzw. Herausziehen am Boden (2) und dem zu befestigenden Teil (3) ausgeübten Kräfte aufnehmen kann.

20. Abnehmbares Teil zum Befestigen eines Teils (3) am Boden (2) nach Patentanspruch 1, dadurch gekennzeichnet, daß der Griff (12) ein Kraftaufnahmeteil bildet, das die auf das Befestigungsteil (1) bei dessen Einstecken bzw. Herausziehen am Boden (2) und dem zu befestigenden Teil (3) ausgeübten Kräfte aufnehmen kann.

21. Abnehmbares Teil zum Befestigen eines Teils (3) am Boden (2) nach Patentanspruch 1, dadurch gekennzeichnet, daß das Querstück (9) durch zwei gegenüberliegende Absätze (20, 21) auf der Seite von Haupt- und Nebenpflock (7, 11) und Griff (12) begrenzt ist, deren Aufgabe darin besteht, jeweils eine Einspannhilfe für das zu befestigende Teil (3) und eine Auflage für ein Organ zum Einstecken (16) zu bilden.

22. Abnehmbares Teil zum Befestigen eines Teils (3) am Boden (2) nach einem beliebigen der Patentansprüche 19, 20, dadurch gekennzeichnet, daß das Querstück (9) oder der Griff (12) in Querrichtung einen weitgehend H-förmigen Querschnitt mit einem zentralen Kern (22) und zwei Seitenpaaren (20, 21) aufweist.

23. Abnehmbares Teil zum Befestigen eines Teils (3) am Boden (2) nach Patentanspruch 22, dadurch gekennzeichnet, daß das Querstück (9) oder der Griff (12) weiterhin innere Versteifungen (23) in den beiden Öffnungen (24) des H-Profils aufweist.

24. Abnehmbares Teil zum Befestigen eines Teils (3) am Boden (2) nach Patentanspruch 1, dadurch gekennzeichnet, daß der Kern des Griffs (12) einen verstärkten Mittelteil (25) aufweist.

25. Abnehmbares Teil zum Befestigen eines Teils (3) am Boden (2) nach Patentanspruch 1, dadurch gekennzeichnet, daß es aus Kunststoff gefertigt ist.

26. Abnehmbares Teil zum Befestigen eines Teils (3) am Boden (2) nach Patentanspruch 25, dadurch gekennzeichnet, daß der Kunststoff mit Glasfaser verstärkt ist, wodurch es leicht und widerstandsfähig wird.

27. Abnehmbares Teil zum Befestigen eines Teils (3) am Boden (2) nach Patentanspruch 1, dadurch gekennzeichnet, daß es vollständig zwischen zwei Rahmenflächen (P1, P2) liegt, die parallel und in der Nähe zueinander verlaufen.

28. Abnehmbares Teil zum Befestigen eines Teils (3) am Boden (2) nach Patentanspruch 27, dadurch gekennzeichnet, daß der Abstand zwischen den beiden Rahmenflächen zwischen 0,6 cm und 2 cm und insbesondere um 1,3 cm liegt.

29. Abnehmbares Teil zum befestigen eines Teils (3) am Boden (2) nach Patentanspruch 1 oder 27, dadurch gekennzeichnet, daß es weiterhin vorstehende (4) bzw. hohle (5) Befestigungselemente in den beiden Rahmenflächen aufweist, wodurch das Zusammenstecken und Zusammenhalten mehrerer Befestigungsteile (1) gewährleistet ist.

30. Abnehmbares Teil zum Befestigen eines Teils (3) am Boden (2) wie z.B. Folie, Netz, Schutzstreifen für Anpflanzungen oder Kulturen, Schnur, Befestigung für Gärtnereigewerbe, Landwirtschaft, Gemüsebau, Gartenbau, das einerseits starr und unverformbar ist und andererseits aus folgenden Teilen besteht:

. einem länglichen Hauptpflock (7) zum Durchstoßen des zu befestigenden Teils (3) mit seinem freien Ende (8) und Einstechen in den Boden (2),

. einem senkrecht zum Hauptpflock (7) verlaufenden Querstück (9) auf der dem freien Ende (8) gegenüberliegenden Seite zum Festhalten des zu befestigenden Teils (3) am Boden (2),

dadurch gekennzeichnet, daß es weiterhin zwei längliche Nebenpflöcke (11) besitzt, die weitgehend parallel zu dem Hauptpflock (7) verlaufen und in Querrichtung symmetrisch dazu entfernt an beiden Enden des Querstücks (9) angebracht sind, wobei ihre Länge geringer ist als die des Hauptpflocks (7),

sowie einem Griff (12), der insgesamt die Form eines Bügels hat und einen Kern (13) zum Greifen und Handhaben sowie links und rechts des Kerns (13) zwei weitgehend linear zueinander verlaufende und den beiden Nebenpflöcken (11) gegenüberliegende Arme (14) besitzt, die den Kern (13) mit dem Querstück (9) verbinden, wobei der Kern (13) und die Arme (14) des Griffs (12) mit dem Querstück (9) eine Öffnung (15) bilden, durch die ein Organ (16) zum Einstecken und Herausziehen des Befestigungsteils (1) am Boden (2) und dem zu befestigenden Teil (3) eingeführt werden kann, das Querstück (9) und der Griff (12) ein Kraftaufnahmeteil bilden, das die auf das Befestigungsteil (1) bei dessen Einstecken bzw. Herausziehen am Boden (2) und dem zu befestigenden Teil (3) ausgeübten Kräfte aufnehmen kann, das Befestigungsstück aus Kunststoff mit Profilstruktur in Querrichtung gefertigt ist und vollständig zwischen zwei Rahmenflächen (P1, P2) liegt, die parallel und in der Nähe zueinander verlaufen.

31. Abnehmbares Teil zum Befestigen eines Teils (3) am Boden (2) wie z.B. Folie, Netz, Schutzstreifen für Anpflanzungen oder Kulturen, Schnur, Befestigung für Gärtnereigewerbe, Landwirtschaft, Gemüsebau, Gartenbau, das einerseits starr und unverformbar ist und andererseits aus folgenden Teilen besteht:

. einem länglichen Hauptpflock (7) zum Durchstoßen des zu befestigenden Teils (3) mit seinem freien Ende (8) und Einstechen in den Boden (2),

. einem senkrecht zum Hauptpflock (7) verlaufenden Querstück (9) auf der dem freien Ende (8) gegenüberliegenden Seite zum Festhalten des zu befestigenden Teils (3) am Boden (2), dadurch gekennzeichnet, daß es zwei längliche Nebenpflöcke (11) besitzt, die weitgehend parallel zu dem Hauptpflock (7) verlaufen und in Querrichtung symmetrisch dazu entfernt an beiden Enden des Querstücks (9) angebracht sind, wobei ihre Länge geringer ist als die des Hauptpflocks (7), sowie einem Griff (12), der mit dem Hauptpflock (7) einen rechtwinklig abgewinkelten Stiel bildet, wobei das Querstück (9) in gleichmäßigem Abstand zum Oberteil des Hauptpflocks (7) angeordnet ist.

32. Abnehmbares Teil zum Befestigen eines Teils (3) am Boden (2) nach Patentanspruch 31, dadurch gekennzeichnet, daß das Querstück (9) weiterhin auch in Richtung bzw. in der Ebene verläuft, die weitgehend rechtwinklig zu der von den Haupt- und Nebenpflöcken (7, 11) gebildeten Ebenen verläuft.

33. Abnehmbares Teil zum Befestigen eines Teils (3) am Boden (2) nach Patentanspruch 32, dadurch gekennzeichnet, daß das Querstück (9) eine Platte auf einem U-Profil besitzt.

**Claims**

1. Removable part for fixing to the ground (2) an element for fixing (3) such as a film, net, strip for protection, planted areas or cultivation, cord, attachment for horticulture, agriculture, market gardening, gardening, rich on the one hand is rigid and non-deformable and on the other hand comprises:

. a main elongate peg (7) intended to pass through, by means of its embedding free end portion (8), the element for fixing (3) and to be embedded in the ground (2);

. a guard (9) fixed transversely with respect to the main peg (7) opposite (10) its embedding free end portion (8) and intended to keep immobile the element for fixing (3) by pressing against the ground (2); characterized in that it further comprises

. at least one elongate secondary peg (11) which is substantially parallel to and transversely spaced from the main peg (7) and is fixed to the guard (9) and intended to be embedded in the ground (2);

and a handle (12) which, with respect to the guard (9), is situated on the opposite side to that where the main and secondary pegs (7, 11) are located, in such a way that once the fixing part (1) is pegged into the ground (2) and into the element for fixing (3), the handle (12) is permanently visible and accessible above the ground (2) and the element for fixing (3).

2. Removable part for fixing to the ground (2) according to Claim 1, characterized in that the handle (12) is fixed to the guard (9).

3. Removable part for fixing to the ground (2) according to Claim 2, characterized in that the handle (12) is generally arc-shaped and comprises a core (13) for gripping and handling and, on either side of the core (13), two legs (14) connecting the core (13) to the guard (9).

4. Removable part for fixing to the ground (2) according to Claim 3, characterized in that the core (13) and the legs (14) of the handle (12) and the guard (9) define a free access opening (15) which forms a passage for a member (16) for pegging in or unpegging the part (1) in the ground (2) and the element (3) for fixing, in particular the foot of the user.

5. Removable part for fixing to the ground (2) according to Claim 2, characterized in that the core (13) is curved such that it is concave towards the guard (9).

6. Removable part for fixing to the ground (2) according to Claim 2, characterized in that the two legs (14) are substantially parallel to one another.

7. Removable part for fixing to the ground (2) according to Claim 2, characterized in that the two legs (14) are fixed substantially to the two ends (17) of the guard (9).

8. Removable part for fixing to the ground (2) according to Claim 2, characterized in that a leg (14) and a secondary peg (11) are substantially co-linear and opposite one another.

9. Removable part for fixing to the ground (2) according to Claim 1, characterized in that the main peg (7) is located substantially in the middle part of the guard (9).

10. Removable part for fixing to the ground (2) according to Claim 1, characterized in that a secondary peg (11) is located substantially at one end (17) of the guard (9).

11. Removable part for fixing to the ground (2) according to Claim 1, characterized in that it comprises two secondary pegs (11).

12. Removable part for fixing to the ground (2) according to Claim 1, characterized in that the two secondary pegs (11) are substantially identical and symmetrical to one another in relation to the main peg (7).

13. Removable part for fixing to the ground (2) according to Claim 1, characterized in that a secondary peg (11) is smaller in length than the main peg (7).

14. Removable part for fixing to the ground (2) according to Claim 13, characterized in that the length of the secondary peg (11) is between approximately one third and two thirds of the length of the main peg (7), in particular in the order of half.

15. Removable part for fixing to the ground (2) according to Claim 1, characterized in that a main or secondary peg (7, 11) has an embedding free end portion (8, 18) which is tapered to a point.

16. Removable part for fixing to the ground (2) according to Claim 1, characterized in that a main or secondary peg (7, 11) has a shape allowing embedding to be longitudinal and preventing any pivoting about the longitudinal direction.

17. Removable part for fixing to the ground (2) according to Claim 16, characterized in that a main or secondary peg (7, 11) has, in cross-section, the shape of a cross or a star having a plurality of arms.

18. Removable part for fixing to the ground (2) according to Claim 1, characterized in that the guard (9) extends substantially rectilinearly.

19. Removable part for fixing to the ground (2) according to Claim 1, characterized in that the guard (9) forms a part which is shaped so as to be suitable for withstanding the forces exerted on the fixing part (1) to peg it into or to unpeg it from the ground (2a) by the element for fixing (3).

20. Removable part for fixing to the ground (2) according to Claim 1, characterized in that the handle (12) forms a part having a strength suitable for withstanding the forces exerted on the fixing part (1) for pegging it into or unpegging it from the ground (2a) by the element for fixing (3).

21. Removable part for fixing to the ground (2) according to Claim 19, characterized in that the guard (9) is limited by two longitudinal opposing edges (20, 21) on the side of the main and secondary pegs (7, 11) and on the side of the handle (12), whereof the functions are to form respectively a clamping bearing for the element for fixing (3) and a pegging-in bearing for a pegging-in member (16).

22. Removable part for fixing to the ground (2) according to any one of Claims 19, 20, characterized in that the guard (9) or the handle (12) has in cross-section a profiled shape, substantially of an H, having a central core (22) and two pairs of side wings (20, 21).

23. Removable part for fixing to the ground (2) according to Claim 22, characterized in that the guard (9) or the handle (12) moreover comprises inner stiffening wings (23) located in the two openings (24) of the H.

24. Removable part for fixing to the ground (2) according to Claim 3, characterized in that the core of the handle (12) comprises a central bulging zone (25).

25. Removable part for fixing to the ground (2) according to Claim 1, characterized in that it is made of plastics material.

26. Removable part for fixing to the ground (2) according to Claim 25, characterized in that the plastics material is reinforced with glass fibres, giving it solidity and lightness.

27. Removable part for fixing to the ground (2) according to Claim 1, characterized in that it is entirely included between two envelope planes ($P_1$, $P_2$) which are parallel to one another and close to one another.

28. Removable part for fixing to the ground (2) according to Claim 27, characterized in that the spacing between the two envelope planes is between approximately 0.6 cm and 2 cm, in particular in the order of 1.3 cm.

29. Removable part for fixing to the ground (2) according to any one of Claims 1 and 27, characterized in that it moreover has male (4) and female (5) hooking members which are located on the two envelope planes and which, by their mutual cooperation, allow a plurality of fixing parts (1) to be superimposed and held against one another.

30. Removable part for fixing to the ground (2) an element for fixing (3) such as a film, net, strip for protection, planted areas or cultivation, cord, attachment for horticulture, agriculture, market gardening, gardening, which on the one hand is rigid and non-deformable and on the other hand comprises:

    . a main elongate peg (7) intended to pass through, by means of its embedding free end portion (8), the element for fixing (3) and to be embedded in the ground (2);

    . a guard (9) fixed transversely with respect to the main peg (7) opposite (10) its embedding free end portion (8) and intended to keep immobile the element for fixing (3) by pressing against the ground (2);

characterized in that it further comprises two secondary elongate pegs (11) which are substantially parallel and spaced transversely opposite and symmetrically to the main peg (7) and which are fixed to the two ends (17) of the guard (9) and are smaller in length than the main peg (7);

and a handle (12) which is generally arc-shaped and comprises a core (13) for gripping and handling and, on either side of the core (13), two substantially co-linear legs (14) opposite the two secondary pegs (14), connecting the core (13) to the guard (9); the core (13) and the two legs (14) of the handle (12) and the guard (9) defining a free access opening (15) which forms a passage for a pegging-in or unpegging member (16): the guard (9) and the handle (12) each forming a part of a strength suitable for withstanding the forces exerted on the fixing part (1) for pegging it in or unpegging it from the ground (2) and from the element (3) for fixing; the part (1) being produced from plastics material which is profiled in cross-section and being entirely included between two envelope planes ($P_1$, $P_2$) parallel to one another and close to one another.

31. Removable part for fixing to the ground (2) an element for fixing (3) such as a film, net, strip for protection, planted areas or cultivation, cord, attachment for horticulture, market gardening, gardening, which on the one hand is rigid and non-deformable and on the other hand comprises:

    . a main elongate peg (7) intended to pass through, by means of its embedding free end portion (8), the element for fixing (3) and to be embedded in the ground (2);

    . a guard (9) fixed transversely with respect to the main peg (7) opposite (10) its embedding free end portion (8) and intended to keep immobile the element for fixing (3) by pressing against the ground (2); characterized in that it further comprises two secondary elongate pegs (11) which are substantially parallel to and spaced transversely opposite and symmetrically to the main peg (7), which are connected to the two ends (17) of the guard (9), and are smaller in length than the main peg;

and a handle (12) forming with the main peg (7) a rod bent in a right angle, the guard (9) being associated regularly with the upper part of the main peg (7).

32. Removable part for fixing to the ground (2) according to Claim 31, characterized in that the guard (9) is also extended in the direction or the plane at least substantially perpendicular to the plane formed by the main and secondary pegs (7, 11).

33. Removable part for fixing to the ground (2) according to Claim 32, characterized in that the guard (9) has a plate on a profiled section bent into a U.

FIG.1

FIG.2

FIG.3

FIG.4

FIG.5

## FIG.6

## FIG.7